Europäisches Patentamt

European Patent Office

Office européen des brevets

(19)

(11) Veröffentlichungsnummer: **0 327 737**
**A2**

## EUROPÄISCHE PATENTANMELDUNG

(12)

(21) Anmeldenummer: 88202998.6

(22) Anmeldetag: 23.12.88

(51) Int. Cl.⁴: **B01D 39/16 , B01D 39/20**

(30) Priorität: 09.01.88 DE 3800457

(43) Veröffentlichungstag der Anmeldung:
16.08.89 Patentblatt 89/33

(84) Benannte Vertragsstaaten:
AT DE ES FR GB IT SE

(71) Anmelder: METALLGESELLSCHAFT AG
Reuterweg 14 Postfach 3724
D-6000 Frankfurt/M.1(DE)

(72) Erfinder: Weber, Ekkehard, Prof.Dr.-Ing.
Amselweg 6
D-4300 Essen 17(DE)

(54) **Filterelement zur Abscheidung von Stäuben.**

(57) Es wird ein Filterelement zur Abscheidung von Stäuben aus Gasen oder Luft beschrieben, das aus Metallen, Legierungen oder Kunststoffen besteht, dünnwandig und folienartig ist, eine Wandstärke von 0,05 bis 2 mm hat sowie eine große Anzahl von regelmäßig angeordneten Löchern unterschiedlicher Form und Größe aufweist, wobei der hydraulische Durchmesser der Löcher 0,01 bis 1 mm beträgt und die von den Löchern bedeckte Fläche 30 bis 90 % der Frontfläche des Filterelements einnimmt.

EP 0 327 737 A2

## Filterelement zur Abscheidung von Stäuben

Die Erfindung bezieht sich auf ein Filterelement zur Abscheidung von Stäuben aus Gasen oder Luft, das aus Metallen, Legierungen oder Kunststoffen besteht, dünnwandig und folienartig ist, eine Wandstärke von 0,05 bis 2 mm hat sowie eine große Anzahl von regelmäßig angeordneten Löchern unterschiedlicher Form und Größe aufweist.

Aus der DE-OS 3 134 148 ist ein Filterelement der eingangs genannten Art bekannt, bei dem der Lochdurchmesser 5 bis 200 μm beträgt und das Verhältnis von Lochabstand zu Lochdurchmesser zwischen 4 : 1 und 5 : 1 liegt. Obwohl mit dem bekannten Filterelement eine hohe Entstaubungsleistung erreicht werden konnte, wurde in einigen Fällen während des Filtrationsvorgangs ein unerwünscht schneller Anstieg des Druckverlusts beobachtet, was die Abreinigung des Filterelements in kurzen Perioden erforderlich machte. Daher liegt der Erfindung die Aufgabe zugrunde, ein Filterelement der eingangs genannten Art zu schaffen, das bei hoher Entstaubungsleistung über einen möglichst langen Zeitraum bei möglichst konstantem Druckverlust betrieben werden kann.

Die der Erfindung zugrundeliegende Aufgabe wird dadurch gelöst, daß der hydraulische Durchmesser der Löcher 0,01 bis 1 mm beträgt und daß die von den Löchern bedeckte Fläche 30 bis 90 % der Frontfläche des Filterelements einnimmt. Es hat sich in überraschender Weise gezeigt, daß ein Filterelement mit unregelmäßig geformten Löchern, die beispielsweise linsenförmig, rechteckig oder sternförmig ausgebildet sein können, dann eine hohe Entstaubungsleistung bei nur langsamem Anstieg des Druckverlusts erbringt, wenn es die erfindungsgemäßen Merkmale aufweist.

Das entsprechend der Erfindung gestaltete Filterelement kann in Form einer ebenen Fläche, eines Schlauchs oder einer Tasche verwendet werden. Die Reinigung des Filterelements erfolgt in bekannter Weise durch Klopfung und/oder durch ein im Gegenstrom durch das Filterelement geführtes Gas, wobei der Gasstrom kontinuierlich oder gepulst ausgebildet sein kann. Mit dem Filterelement werden selbst Feinstäube so weit aus dem Rohgas abgetrennt, daß das Reingas einen Staubgehalt<10 mg/Nm$^3$ hat. Durch die Verwendung von Löchern, deren Form von der des Kreises abweicht, wird die Verstopfungsgefahr vermindert, wodurch für das zu entstaubende Gas eine hohe Durchlässigkeit erhalten bleibt und auch über einen längeren Zeitraum nur ein langsamer Anstieg des Druckverlusts eintritt.

Der hydraulische Durchmesser ist definiert als Quotient aus der vierfachen Querschnittsfläche eines Loches und dem Umfang eines Loches, das als Strömungskanal wirkt

$$d_h = 4 \cdot \frac{\text{Querschnittsfläche des Lochs}}{\text{Umfang des Lochs}} = \frac{4 \, F}{U}$$

## Ansprüche

Filterelement zur Abscheidung von Stäuben aus Gasen oder Luft, das aus Metallen, Legierungen oder Kunststoffen besteht, dünnwandig und folienartig ist, eine Wandstärke von 0,05 bis 2 mm hat sowie eine große Anzahl von regelmäßig angeordneten Löchern unterschiedlicher Form und Größe aufweist, dadurch gekennzeichnet, daß der hydraulische Durchmesser der Löcher 0,01 bis 1 mm beträgt und daß die von den Löchern bedeckte Fläche 30 bis 90 % der Frontfläche des Filterelements einnimmt.